(19) Europäisches Patentamt
European Patent Office
Office européen des brevets

(11) **EP 2 989 176 B1**

(12) **EUROPEAN PATENT SPECIFICATION**

(45) Date of publication and mention
of the grant of the patent:
**15.04.2020 Bulletin 2020/16**

(51) Int Cl.:
***C09K 8/528*** *(2006.01)*      ***C22B 3/00*** *(2006.01)*
***C02F 5/10*** *(2006.01)*

(21) Application number: **14788035.5**

(22) Date of filing: **24.04.2014**

(86) International application number:
**PCT/US2014/035288**

(87) International publication number:
**WO 2014/176419 (30.10.2014 Gazette 2014/44)**

(54) **METHOD FOR CONTROLLING SCALE FORMATION, USING AN ALLYLSULFONATE-STYRENE SULFONATE POLYMER**

VERFAHREN ZUR REGULIERUNG DER KESSELSTEINBILDUNG UNTER NUTZUNG EINES ALLYLSULFONAT-STYRENSULFONAT-POLYMERS

PROCÉDÉ POUR LE CONTRÔLE DE LA FORMATION DE TARTRE, UTILISANT UN POLYMÈRE ALLYLSULFONATE-STYRÈNESULFONATE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.04.2013 US 201361815629 P**

(43) Date of publication of application:
**02.03.2016 Bulletin 2016/09**

(73) Proprietor: **KEMIRA OYJ**
**00180 Helsinki (FI)**

(72) Inventors:
• **MOORE, Lucas**
**Marietta, GA 30067 (US)**

• **SANDERS, Laura**
**Atlanta, GA 30313 (US)**

(74) Representative: **Carpmaels & Ransford LLP**
**One Southampton Row**
**London WC1B 5HA (GB)**

(56) References cited:
**WO-A1-2013/019627**    **WO-A1-2013/019627**
**CA-A1- 2 050 017**    **JP-A- H1 044 626**
**JP-A- H08 165 438**    **US-A1- 2012 032 093**
**US-A1- 2012 118 575**

## Description

### FIELD OF THE ART

The present disclosure relates to scale-inhibiting polymers, compositions thereof and methods for controlling mineral scale deposition.

### BACKGROUND

Scale deposits are formed by the precipitation and crystal growth of, e.g., solid salts, oxides and hydroxides, at a surface in contact with a fluid, such as water or water vapor. In industrial fluids, such as produced waters in oil and gas extraction, and in process waters in mineral processing, alkaline earth metal or transition metals (cations) are generally present, including calcium, barium, and magnesium. In addition to cationic species, several anions are present as well, namely bicarbonate, carbonate, sulfate, phosphate, and silicate (U.S. Patent No. 4,566,973; European Patent Publication No. 0 538 026 A1.). Precipitation of these ions occurs when solubility is exceeded either in the bulk fluid or at the surfaces on which the scale forms, including pipes and autoclaves (Frayne, C. (2010) Cooling Water Treatment Principles and Practices: Charts and Notes for Field Use, Chemical Publishing Company, Revere, MA.). Thermodynamically, crystallization or precipitation becomes feasible when the activity of ions in solution is above their saturation limit. The kinetics of precipitation can also be a key determinant of the severity of scaling, where nucleation of scale formation on surfaces induces the growth of crystals and low concentration of nucleation sites can slow the crystallization kinetics (Antony et al. (2011) Scale formation and control in high pressure membrane water treatment systems: A Review, Journal of Membrane Science, 383, 1-16.).

In industrial processing systems and circuits, scale formation can cause various problems. For example, in mineral processing systems, scale formation can cause reduced heat transfer efficiency, flow restrictions such as plugging of pipelines, under-deposit corrosion and microbiological growth resulting in reduced metal recovery, and increased cleaning costs and equipment damage and/or failure. These problems ultimately cause losses in production, increased operating costs and increased capital equipment expenditures.

Various types of anti-scalants, i.e., specialty chemicals that are generally employed to prevent and control scale, can be used to control and/or prevent scale formation in industrial processes. Conventional anti-scalants include dispersants, threshold inhibitors, sequestering agents, and chelants. Chelating or sequestering agents function by complexing with the cations present to render them unable to interact with anions of sulfate ($SO_4^{2-}$) or carbonate ($CO_3^{2-}$) to form scale (Caudle, K. (2010) Test methodology to ensure adequacy of barium sulfate scale treatment, World Oil Online, Vol. 123, No. 11). Dispersants, cationic or anionic, are materials that adsorb onto the surface of particles thereby increase the charge on the particle and preventing agglomeration into larger particles or deposition (Stephenson, D.J. (1988) Water and Wastewater Systems Analysis, Elsevier Science Publishing Company, Inc., New York, NY). Threshold inhibitors are deposit control agents that inhibit precipitation at dosages far below the stoichiometric level required for sequestration or chelation and have the ability to maintain a tolerated level of scale forming minerals in solution (General Electric (GE) Power & Water (2011) Handbook of Industrial Water Treatment). Another class of anti-sealants are crystal modifiers or growth retarders, materials which adhere to growth sites on the crystal or particle and therefore inhibit further growth causing the crystals or particles to remain non-adherent (Antony et al. (2011) Scale formation and control in high pressure membrane water treatment systems: A Review, Journal of Membrane Science, 383, 1-16). These anti-scalant chemicals used for control of mineral scaling effectively work by interfering with crystal/particle growth. The most common and efficient method to control and prevent scale involves the use of these chemicals at very low concentrations, generally in the 3-20 ppm level, in aqueous systems (Hayword G., Ltd. (2013) Produced Water Chemical Treatment 101.

In addition to scaling in aqueous solutions, scale formation can form in many processing fluids where high levels of dissolved solids are present, especially in such processes that also include heat transfer apparatus. These processes include, but are not limited to, processes that rely on autoclaves, and heat exchangers, such as carbon in leach circuits, carbon in pulp circuits, pressure oxidation equipment, flotation processes and thickener overflows. In cases where heat transfer apparatus are used, such as heat exchangers or autoclaves, scale of a sufficient thickness reduces heat transfer efficiency (U.S. Patent No. 4,454,046.). Such processes include, but are not limited to mining, mineral processing, oil and gas exploration and production, pulp and paper processing, food and beverage processing (e.g., molasses transport), coal slurry transport.

By way of example, in alumina production, a key process involves Bayer digestion which provides high heat transfer efficiency and long operation cycle times. High temperatures and indirect preheating equipment are used to raise the temperature of, e.g., spent liquor or bauxite slurry, to the target values in order to achieve digestion conditions needed to reduce energy consumption and raise production efficiency. Reactions in the slurry take place and form solids that may precipitate on the preheating surfaces as scale. This scale formation results in a reduction of the heat transfer coefficient, a shortening of the operating cycle period, and ultimately causes an increase in equipment capital investments (Songqing, G.; Zhonglin, Y. (2004) Preheaters and Digesters in the Bayer Digestion Process, Light Metals, The Minerals, Metals & Materials Society).

In the case of mining processes involving mineral slurries where scale buildup can form, the conventional anti-scalant chemistries are not necessarily efficient. Conventional anti-scalant compositions generally have limited solubility in high brine environments which are characteristic of mining processes, specifically in salt water brines having in excess of about 150 grams of total dissolved solids per liter of brine (see, e.g., U.S. Patent No. 5,112,496). Slurries which are used in mining processes can be very high in suspended solids, generally 20-40% by weight, but some are as high as 70%. It is speculated that in such mineral slurries, most conventional antiscalants are adsorbed to the solids and therefore not able to act as a scale inhibitor.

WO 2013/019627 discloses a method for preventing scale formation in circulating fluid, wherein the method comprises adding a scale-inhibiting polymer, to the fluid; wherein the scale-inhibiting polymer comprises two or more recurring units, wherein at least one recurring unit is a sulfonate-containing monomer and at least one recurring unit is selected from the group consisting of maleic acid, itaconic acid, acrylamide, acrylic acid, methacrylic acid, polyethylene glycol monomethacrylate, maleic anhydride, t-butyl acrylamide, hydroxy propyl acrylate, hydroxy ethyl methacrylate, hydroxy propyl methacrylate, and vinyl phosphonic acid.

## BRIEF SUMMARY

The invention is defined by the claims. Disclosed herein is a scale-inhibiting polymer comprising two or more recurring monomers wherein at least one recurring monomer is an allyl sulfonate-containing monomer and at least one recurring monomer is a styrene sulfonate-containing monomer. Compositions comprising the scale-inhibiting polymers and a solvent, as well as methods for preventing scale formation in circulating fluid by adding the scale-inhibiting polymer to the circulating fluid, are also provided.

The disclosure is understood more readily by reference to the following detailed description of the various features of the disclosure and the examples included therein.

## BRIEF DESCRIPTION OF THE DRAWINGS

Figure 1 is a graph which illustrates the effect of exemplary and comparative scale-inhibiting polymers at various concentrations on controlling calcium sulfate formation in the presence of solids.

Figure 2 is a graph which illustrates the effect of exemplary scale-inhibiting polymers at various concentrations on controlling calcium sulfate formation in the presence of solids.

Figure 3 is a graph which illustrates the effect of an exemplary SAS/NaSS scale-inhibiting polymer at various concentrations on inhibiting calcium sulfate formation in the presence of 0% solids and 10% solids.

Figure 4 is a graph which illustrates the effect of exemplary SAS/NaSS scale-inhibiting polymer - phosphonate blends at various concentrations on inhibiting calcium sulfate formation in the presence of solids.

## DETAILED DESCRIPTION

The exemplary embodiments described herein provide methods for inhibiting scale formation in circulating fluid as defined by claim 1. Also disclosed are scale-inhibiting polymers, and compositions comprising the scale-inhibiting polymers. The scale-inhibiting polymers, compositions and methods described herein can provide efficient and economical scale inhibition in various industrial processes, for example, to control or prevent the formation or accumulation of scale during metal extraction from mineral ores, oil and gas exploration and production, pulp and paper processing, food and beverage processing (e.g., molasses transport), and coal processing.

As used herein, the terms "polymer," "polymers," "polymeric," and similar terms are used in their ordinary sense as understood by one skilled in the art, and thus are used herein to refer to or describe a large molecule (or group of such molecules) that contains recurring monomers. Polymers may be formed in various ways, including by polymerizing monomers and/or by chemically modifying one or more recurring monomers of a precursor polymer. A "homopolymer" is a polymer comprising substantially identical recurring monomers formed by, e.g., polymerizing a particular monomer. A polymer may be a "copolymer" comprising two or more different recurring monomers formed by, e.g., copolymerizing two or more different monomers, and/or by chemically modifying one or more recurring monomers of a precursor copolymer. The term "terpolymer" is used herein to refer to polymers containing three different recurring monomers.

The term "scale-inhibiting polymer" generally refer to polymers or compositions containing such polymers that are added to a fluid, to interfere with nucleation, growth, and/or agglomeration of particles and thereby control, reduce or inhibit the formation, deposition and adherence of scale deposits on substrate surfaces in contact with scale-forming fluids. The scale-inhibiting polymer controls, reduces or inhibits the formation of scale (for example, the total amount and/or rate of formation of scale) in a particular system as compared to an equivalent system that does not contain the added scale-inhibiting polymer. In exemplary embodiments, a scale-inhibiting polymer is added to a fluid containing colloidal or dissolved materials such as minerals, including metal ions, e.g., ions oxides and hydroxides of calcium, barium, magnesium, aluminum, strontium, iron, etc.; and anions such as bicarbonate, carbonate, oxalate, sulfate, phosphate, silicate, fluoride, etc., that are likely to cause scale or mineral deposits.

As used herein, the term "scale" or "mineral scale" refers to the accumulation of unwanted material on solid surfaces, in particular when such deposition is to the detriment of the functioning of apparatus on which that scale forms. Such unwanted material includes insoluble substances such as insoluble salts, that have a tendency to form in aqueous systems such as boiler water, cooling water, seawater (e.g., in oil platform applications), brackish water, oilfield water, municipal treatment plant water, paper mill water, mining water, and industrial treatment plant water. In particular, "scale" includes inorganic salts typically formed by the reaction of metal cations such as calcium, magnesium or barium with inorganic anions, such as phosphate, carbonate, sulfate, oxides, and hydroxides. Such salts are typically insoluble or have low solubility in water.

The terms "preventing scale" or "treatment of scale" will be understood by those skilled in the art to have a broad and customary meaning that includes using the scale-inhibiting polymers and/or compositions to reduce, control or inhibit the amount of scale and/or control or reduce the rate of formation of scale in various aqueous systems, as compared to equivalent aqueous systems that do not contain the scale-inhibiting polymers and/or compositions.

POLYMERS

In exemplary embodiments, a scale-inhibiting polymer comprises two or more recurring monomers, wherein at least two recurring monomers are sulfonate-containing monomers and wherein the scale-inhibiting polymer has a charge of about 0% to about 85%, about 5% to about 80%, about 10% to about 75%, about 15% to about 70%, about 20% to about 65%, about 25% to about 60%, about 30% to about 55%, or about 35% to about 45%. In exemplary embodiments, a scale-inhibiting polymer comprises two or more recurring monomers, wherein in at least two recurring monomers are a sulfonate-containing monomer, and wherein the scale-inhibiting polymer has a charge of less than about 50%, about 45%, about 40%, about 35%, about 30%, about 25%, about 20%, about 15%, or about 10%.

One of the recurring monomers is an allyl sulfonate-containing monomer, for example an allyl sulfonate salt selected from sodium or potassium. In exemplary embodiments, one of the recurring monomers is sodium allyl sulfonate. One of the recurring monomers is a styrene sulfonate-containing monomer, for example a styrene sulfonate salt selected from sodium or potassium. In exemplary embodiments, one of the recurring monomers is sodium styrene sulfonate salt.

The scale-inhibiting polymer comprises two or more recurring monomers wherein at least one recurring monomer is an allyl sulfonate-containing monomer and at least one recurring monomer is a styrene sulfonate-containing monomer. In exemplary embodiments, the allyl sulfonate-containing monomer is sodium allyl sulfonate. In exemplary embodiments, the styrene sulfonate-containing monomer is sodium styrene sulfonate.

In exemplary embodiments, the scale-inhibiting polymer comprises three or more recurring monomers, wherein at least one recurring monomer is an allyl sulfonate-containing monomer and at least one recurring monomer is a styrene sulfonate-containing monomer, and at least one other recurring monomer.

In exemplary embodiments, the scale-inhibiting polymer comprises three or more recurring monomers, wherein at least one recurring monomer is an allyl sulfonate-containing monomer, at least one recurring monomer is a styrene sulfonate-containing monomer, and at least one recurring monomer is selected from the group consisting of maleic acid, itaconic acid, acrylamide, acrylic acid, methacrylic acid, polyethylene glycol monomethacrylate, maleic anhydride, t-butyl acrylamide, hydroxy propyl acrylate, hydroxy ethyl methacrylate, hydroxy propyl methacrylate, and vinyl phosphonic acid. In certain embodiments, at least one recurring monomer is acrylamide. In certain embodiments, at least one recurring monomer is maleic acid.

In exemplary embodiments, the scale-inhibiting polymer is a copolymer of sodium allyl sulfonate and sodium styrene sulfonate. In exemplary embodiments, the scale-inhibiting polymer is a terpolymer of a sodium allyl sulfonate, sodium styrene sulfonate and maleic acid. In exemplary embodiments, the scale-inhibiting polymer is a terpolymer of a sodium allyl sulfonate, sodium styrene sulfonate and acrylamide.

In exemplary embodiments, the scale-inhibiting polymer is a copolymer. In exemplary embodiments, the scale-inhibiting polymer is a terpolymer.

In exemplary embodiments, one recurring monomer in the scale-inhibiting polymer is maleic acid. In exemplary embodiments, one recurring monomer in the scale-inhibiting polymer polymer is itaconic acid. In exemplary embodiments, one recurring monomer in the scale-inhibiting polymer is acrylamide. In exemplary embodiments, one recurring monomer in the scale-inhibiting polymer is acrylic acid. In exemplary embodiments, one recurring monomer in the scale-inhibiting polymer is methacrylic acid. In exemplary embodiments, one recurring monomer in the scale-inhibiting polymer is polyethylene glycol monomethacrylate. In exemplary embodiments, one recurring monomer in the scale-inhibiting polymer is maleic anhydride. In exemplary embodiments, one recurring monomer in the scale-inhibiting polymer is t-butyl acrylamide. In exemplary embodiments, one recurring monomer in the scale-inhibiting polymer is hydroxy propyl acrylate. In exemplary embodiments, one recurring monomer in the scale-inhibiting polymer is hydroxy ethyl methacrylate. In exemplary embodiments, one recurring monomer in the scale-inhibiting polymer is hydroxy propyl methacrylate. In exemplary embodiments, one recurring monomer in the scale-inhibiting polymer is vinyl phosphonic acid.

In exemplary embodiments, the scale-inhibiting polymer has the molecular weight of about 1,000 to about 30,000 Daltons, or from about 1,000 to about 12,000 Daltons.

In exemplary embodiments, the scale-inhibiting polymer comprises one or more recurring monomers as exemplified herein in an amount of about 1% to about 90%, about 1% to about 80%, about 1% to about 70%, about 5% to about 60%, about 5% to about 50%, about 5% to about 40%, about 5% to about 30%, or about 5 to about 20% by mole. In exemplary embodiments, an exemplary scale-inhibiting polymer comprises one or more recurring monomer as exemplified herein in an amount of up to about 90%, about 80%, about 70%, about 60%, about 50%, about 40%, about 30%, about 20%, about 15%, or about 10% by mole.

In certain embodiments, the scale-inhibiting polymer is a copolymer comprising two sulfonate-containing monomers, for example a copolymer with approximately equal proportions of two sulfonate-containing monomers. In certain embodiments, the scale-inhibiting polymer is a terpolymer comprising recurring monomers of at least two sulfonate-containing monomers and a third monomer. In exemplary embodiments, the scale-inhibiting polymer comprises less than 30% of a third monomer and from about 30% to about 60% of each of the sulfonate-containing monomers. In exemplary embodiments, the third monomer is maleic acid. In exemplary embodiments, the third monomer is acrylamide.

In exemplary embodiments, the scale-inhibiting polymer contains one or more additional monomer(s) or recurring monomers. Any suitable monomers may be used, as necessary or desired. Exemplary additional monomers include any monomer that does not adversely impact the scale-inhibiting properties of the scale-inhibiting polymer or that is known in the art of scale-inhibiting polymers.

In certain embodiments, maleic acid is prepared from maleic anhydride and water.

In exemplary embodiments, the synthesis of the scale-inhibiting polymer can be carried out by any suitable polymerization reaction which is known in the art, or later developed.

An exemplary polymerization reaction occurs by free radical polymerization, such as any reaction that can be initiated by any suitable means which results in generation of a suitable free-radical. In the radical polymerization technique the source of free radicals can be from any suitable method of generating free radicals such as thermally induced method, redox initiating method, photochemical initiating method or high energy radiation such as electron beam, X or gamma ray radiation. An exemplary method of generating free radicals is by thermal induction.

In the radical polymerization reactions, typical thermal initiators include azo compounds, peroxides, peroxyesters or persulfates. The polymerization initiators are not limited to any particular species but may be any of the conventional initiators, inclusive redox initiators, azo initiators and peroxides. In an exemplary embodiment, the polymerization initiator is an azo initiator. Exemplary azo initiators include, among others, azonitrile compounds such as 2,2'-azobis(2-methylpropionitrile) (AIBN), azobisdimethylvaleronitrile and azobisdimethylmethoxyvaleronitrile; azoamidine compounds such as 2,2'-azobis(methylpropionamidine)dihydrochloride (V-50), VA-041, VA-044 and VA-061 (V-50, VA-041, VA-044 and VA-061 are products of Wako Pure Chemical Industries , Ltd.); azoamide compounds such as VA-080, VA-086 and VA-088 (products of Wako Pure Chemical Industries, Ltd.); azoalkyl compounds such as azodi-tert-octane and azoditert-butane; cyanopropylazo-formamide, 4,4'-azobis(cyanovaleric acid), 4,4'-azobis-(cyanopentanoic acid) dimethylazobismethyl propionate, azobishydroxymethyl-propionitrile and the like. In an exemplary embodiment, the initiator is 2,2'-azobis-(methylpropionamidine)dihydrochlohde (V-50), or 4,4'- azobis(cyanopentanoic acid) or 4,4'-azobis(cyanovaleric acid). Exemplary persulfates include ammonium persulfate and sodium persulfate.

In an exemplary embodiment, a radical polymerization initiator is used alone, or two or more thereof are used as a mixture.

In an exemplary embodiment, the molar ratio of the radical polymerization initiator to the monomer is from about 0.0001 to about 0.1, such as from about 0.0005 to about 0.05, or from about 0.0005 to about 0.01.

COMPOSITIONS

In exemplary embodiments, a scale-inhibiting composition comprises a scale-inhibiting polymer according to the embodiments described herein, and a solvent. The composition comprises a scale-inhibiting polymer that includes two or more recurring monomers, wherein at least one recurring monomer is an allyl sulfonate-containing monomer and at least one recurring monomer is a styrene sulfonate-containing monomer. In exemplary embodiments, the solvent is water or an aqueous solution, for example a solution of water and other solvents wherein water is greater than 40% of the solution by weight or volume. In certain embodiments, the solvent is a system or blend of solvents, for example water and an alkylamine solvent. In exemplary embodiments, the solvent or blend of solvents comprise an alcohol, for example methanol, ethanol or isopropanol. In an exemplary embodiment, the solvent or blend of solvents comprise toluene.

According to exemplary embodiments, the scale-inhibiting polymer or composition is provided in any suitable form as necessary or desired, including solid or liquid form. In an exemplary embodiment, the scale-inhibiting polymer is provided in an aqueous solution in which about 25% to about 70% (by weight) of the solution, or composition, is the scale-inhibiting polymer. In exemplary embodiments, the solution or composition may have a pH of from about 1 to about 8, from about 2 to about 7, or from about 3 to about 6. In exemplary embodiments, the solution or composition may have a pH of from about 8 to about 11, from about 8.5 to about 10.5, or from about 9 to about 10.

As referred to herein, the phrase "effective scale-inhibiting amount" means an amount of a scale-inhibiting polymer or a scale-inhibiting composition to provide any necessary or desired scale control, inhibition, removal or reduction. In exemplary embodiments, the scale-inhibiting composition may include an effective scale-inhibiting amount of a scale-inhibiting polymer as described herein. Exemplary scale-inhibiting compositions may, for example, contain from about 5% to about 95% by weight of a scale-inhibiting polymer.

In certain embodiments, the scale-inhibiting composition consists essentially of the scale-inhibiting polymer.

In exemplary embodiments, the scale-inhibiting composition is a liquid. In exemplary embodiments, the scale-inhibiting composition comprises water or a water-based liquid, for example a seawater-based liquid, but other liquids are not excluded. In other embodiments, the scale-inhibiting composition comprises a solvent that is not water, for example, a polar organic solvent such as a glycol or a glycol ether-based solvent.

In exemplary embodiments, the scale-inhibiting composition comprises one or more additional additives or water treatment agents. Representative, non-limiting additional additives or agents include: other scale-inhibiting polymers or agents, salts, oils, colorants, flow modifiers, surfactants, such as anionic surfactants (e.g. $C_{10-20}$ alkyl benzene sulfonates, $C_{10-20}$ olefin sulfonates, $C_{10-20}$ alkyl sulfates, $C_{10-20}$ alkyl 1 to 25 mole ether sulfates, $C_{10-20}$ parafin sulfonates, $C_{10-20}$ soaps, $C_{10-20}$ alkyl phenol sulfates, sulfosuccinates, sulfosuccinamates, lignin sulfonates, fatty ester sulfonates, $C_{10-20}$ alkyl phenyl ether sulfates, $C_{10-20}$ alkyl ethanolamide sulfates, $C_{10-20}$ alpha sulfo fatty acid salts, $C_{10-20}$ acyl sarcosinates, isethionates, $C_{10-20}$ acyl taurides, $C_{10-20}$ alkyl hydrogen phosphates), non-ionic surfactants (e.g. ethoxylated and/or propoxylated $C_{10-20}$ alcohols, ethoxylated and/or propoxylated $C_{10-20}$ carboxylic acids, alkanolamides, amine oxides, and/or $C_{10-20}$ acyl sorbitan and/or glyceryl ethoxylates) amphoteric surfactants (e.g. betaines, sulfobetaines, and/or quaterised imidazolines), and/or cationic surfactants (e.g. benzalkonium salts, $C_{10-20}$ alkyl trimethyl ammonium salts, and/or $C_{10-20}$ alkyl trimethyl); sequestrants, chelating agents, corrosion inhibitors (e.g., imidazoline and quaterantry ammonium salts); and/or other threshold agents (e.g., polymers such as aminometholine phosphonate polymers, polyacrylic acid, or non polymeric agents such as sodium tripolyphosphate, sodium ethylenediamine tetracetate, sodium nitrilo triacetate, tetra potassium pyrophosphate, acetodiphosphonic acid and its salts, ammonium trismethylene phosphonic acid and its salts, ethylenediamine tetrakis (methylene phosphonic) acid and its salts, diethylenetriamine pentakis (methylene phosphonic) acid and its salts); tolyltriazole and mixtures of nitrate, benzqate, HHP and/or PTCB); hydrate inhibitors (e.g., methanol); cinetic inhibitors such as anti-agglomeration agents; biocides (e.g. tetrakis (hydroxymethyl) phosphonium salts, formaldehyde, glutaraldehyde, DENPA, bromopol isothiazoronal); oxidizing biocides and/or bleaches (e.g. chlorine, chlorine dioxide, hydrogen peroxide, sodium perborate); phosphonates, such as Bis (hexamethylene) triaminepentakis (methylene phosphonic acid) [BHTPMP], Aminotris(methylphosphonic acid) [ATMP], 1-hydroxyethane-1,1-diphosphonic acid [HEDP], ethylenediamine tetra(methylene phosphonic acid) [EDTMP], hexamethylenediamine tetra(methylene phosphonic acid) [HDTMP], hydroxyethylamino bis(methylene phosphonic acid) [HEMPA], 2-phosphonobutane-1,2,4-tricarboxylic acid [PBTC], Polyamino Polyether Methylene Phosphonate [PAPEMP]; foam controlling agents such as silicone antifoams; oxygen scavengers such as hydrazines and/or hydroxylamines; pH controlling and/or buffering agents such as amines, borates, citrates and/or acetates; chromium salts; zinc salts; asphaltene inhibitors; wax inhibitors; demulsifiers; other scale inhibitors; and/or other water treatment agents such as polymeric dispersants and coagulants including polymaleic, polyacrylic and polyvinylsulfonic acids and their salts, starches and/or carboxy methyl cellulose, and/or molybdates.

In exemplary embodiments, the scale-inhibiting composition may include from about 5% to about 95% by weight of the scale-inhibiting polymer and from about 5% to about 90% by weight of one or more of any of the aforesaid additives or water treatment agents. In exemplary embodiments, the scale-inhibiting composition may include from about 10% to about 90% by weight of the scale-inhibiting polymer and from about 10% to about 85% by weight of one or more of any of the aforesaid additives or water treatment agents. In exemplary embodiments, the scale-inhibiting composition may include from about 15% to about 85% by weight of the scale-inhibiting polymer and from about 15% to about 80% by weight of one or more of any of the aforesaid additives or water treatment agents.

In an exemplary solvent-based scale-inhibiting composition, the scale-inhibiting polymer may be combined with a solvent, such as water, using any suitable method. For example, the scale-inhibiting polymer may be dissolved, suspended, dispersed or emulsified in the solvent. The amount of solvent in the solvent-cased or aqueous scale-inhibiting composition may vary, as necessary or desired. For example an aqueous scale-inhibiting composition may comprise about 20% to about 80% scale-inhibiting polymer, based on the total weight of the aqueous scale-inhibiting composition.

The performance or efficacy of scale-inhibiting compositions can be evaluated using any known methods for antiscalant or scale inhibitor performance testing, including but not limited to: static antiprecipitation (jar tests), crystal growth kinetics, rotation tests and dynamic scale inhibition tests, for example dynamic tube blocking test, stirred vessel test, and rotating spindle test.

METHODS

A disclosed method for preventing scale formation in circulating fluid comprises adding any scale-inhibiting polymer contemplated in the present disclosure, or a composition comprising the scale-inhibiting polymer to the circulating fluid; wherein the scale-inhibiting polymer and composition are as described herein.

In exemplary embodiments, a method for preventing scale formation in circulating fluid comprises adding a scale-inhibiting polymer, or a composition comprising the scale-inhibiting polymer and a solvent, to the circulating fluid as defined in claim 1; wherein the scale-inhibiting polymer comprises two or more recurring monomers wherein at least one recurring monomer is an allyl sulfonate-containing monomer and at least one recurring monomer is a styrene sulfonate-containing monomer.

In exemplary embodiments, the circulating fluid is utilized in, or is a component of, a mining process, or is in a system that is utilized in a mining process.

In the disclosure, the circulating fluid is utilized in, or is a component of, an oil and gas exploration or production process, or is in a system that is utilized in an oil and gas exploration and production process.

In the disclosure, the circulating fluid is utilized in, or is a component of, pulp and paper processing, or is in a system that is utilized in pulp and paper processing.

In the disclosure , the circulating fluid is utilized in, or is a component of, food and beverage processing, or is in a system that is utilized in Food and beverage processing (e.g., molasses transport).

In the disclosure, the circulating fluid is utilized in, or is a component of, coal processing, or is in a system that is utilized in coal processing (e.g., coal slurry transport).

In exemplary embodiments, the circulating fluid is, or has been at some point, in contact with mineral ore slurries, for example ore slurries comprising limonite, hematite, nickel or copper.

In exemplary embodiments, a method for preventing scale formation in a mining process comprises adding a scale-inhibiting polymer, or a composition comprising the scale-inhibiting polymer to a fluid utilized in the mining process; wherein the scale-inhibiting polymer and composition are as described herein.

In exemplary embodiments, the scale-inhibiting polymer may be added to a fluid, for example an aqueous solution, that contains metal ions, such as ions of calcium, barium, magnesium, aluminum, strontium, iron, etc. and anions such as bicarbonate, carbonate, oxalate, sulfate, phosphate, silicate, fluoride, etc., that are likely to cause scale or mineral deposits. In certain embodiments, the fluid is an aqueous alkali cyanide solution. In an exemplary embodiment, the scale-inhibiting polymer may be added to an alkali cyanide solution, such as sodium cyanide solution. In an exemplary method, the inhibitor is dosed in the form of a liquid, such an aqueous liquid.

In exemplary embodiments, the dosing of the scale-inhibiting polymer to the aqueous solution or fluid may be from about 1 to about 5000 ppm. In some embodiments the dosing may be up to about 1000 ppm, or up to about 100 ppm. In an exemplary embodiment, the dosage is about 30 ppm. In exemplary embodiments, the dosing of the scale-inhibiting polymer to the process will produce any necessary or desired control or reduction in scale or mineral deposition in the process. The effectiveness of the scale-inhibiting polymer may be measured, for example, by measuring and comparing the amount of scaling mineral that is dissolved in the solution to which the scale-inhibiting polymer is added. In an exemplary embodiment, the scale-inhibiting polymer may have a "minimum inhibitory concentration" (MIC), below which the scale-inhibiting polymer is ineffective to control, reduce or prevent scale or mineral deposition.

The scale-inhibiting polymer or composition may be added directly to the desired fluid to be treated in a fixed quantity or can be added continuously or intermittently to the fluid as necessary or desired.

In an exemplary embodiment, the mining process is a metal extraction process from raw mineral ore. The metal may include any valuable metal, such as gold, silver, mercury and copper, as well as a diverse range of transition metals including iron, nickel, cobalt, vanadium, and titanium, and metals such as zinc, cadmium, tin, molybdenum, zirconium and the like. In one embodiment, the metal comprises gold, silver, mercury, nickel or copper.

The methods described herein may be used in various mining methods or processes. For example, the methods may be used in a heap leaching process. A typical heap leaching process involves mining and then crushing the ore. The crushed ore is stacked in a mound (a "heap") over an impermeable liner. The ore may be blended with lime to maintain an alkaline pH while the cyanide solution is in use. The heap is irrigated with a leach solution (aqueous cyanide solution), such as for example, with hoses or sprinklers that spray the solution on the surface of the heap over a period of time (e.g. about 60 to 90 days). The cyanide solution dissolves the metals and migrates (percolates) through the ore heap until it contacts the impermeable liner below, which is sloped in one direction. The "pregnant" solution containing the dissolved metals moves down this slope and is collected for recovery of the gold from the solution. In a typical vat leaching process, the ore and leach solution are combined in an indoor vat, rather than a heap. The vat leaching process is typically practiced in regions in which the environmental conditions are unfavorable to year-round operation of a heap-type leaching process.

The methods described herein may be used in a methods for recovering metal involving adsorption of the metal onto an activated carbon source. A conventional method for recovering the precious metal from a pregnant solution involves adsorption of the metal onto an activated carbon source, such as coconut shell carbon. Activated carbons can adsorb up to about 30,000 ppm of gold in a cyanide complex. One simple method for adsorption is to introduce the pregnant solution from the leaching process to a series of columns or drums that contain activated carbon. For example, the solution may be forced up from the bottom of each column through the carbon, where the gold is adsorbed onto the surface of the carbon. The solution may flow through a series of these circuits until substantially all of the gold is collected on the carbon. The carbon, with adsorbed gold, may be purified and separated from the other materials, and the gold may later be removed (stripped, desorbed) from the carbon. The remaining solution may be further treated and recycled to the process.

The methods described herein may be used in metal extraction processes combine leaching and activated carbon recovery operations, for example, in a conventional carbon-in-pulp (CIP) process or a carbon-in-leach (CIL) process. the methods described herein may be used in autoclaves, thickeners, discharge pipelines, slurry transport, or filtration units.

In a CIP process, the ore ("pulp") is finely ground and leached (using a cyanide solution) in a series of agitated leaching tanks to dissolve the gold. Instead of separating the solids from the pregnant solution, the entire slurry flows to a series of tanks in circuit where the slurry is contacted with activated carbon (that is coarser than the ore particle). The carbon adsorbs the gold from the slurry solution, and is removed from the slurry by coarse screening. The gold may then be removed from the carbon.

A typical CIL process integrates the leaching and adsorption steps into a single process. For example, the leaching tanks are fitted with carbon retention screens. Carbon is directly added to the leach so that the gold is adsorbed onto carbon almost as soon as it is dissolved by the cyanide solution. For the CIL process, it may be necessary or desirous to pretreat the ore prior to processing. For example, for carbonate rich ore, the carbon in the ore may first be reduced so that it will not compete for the gold coordination in the CIL circuit. This is done by burning the majority of the carbon in a roaster. The roasting step is conducted at a temperature that will eliminate the carbon without affecting the metals present. If the ore is rich in sulfides then in the pretreatment step the ore will be autoclaved to oxidize the sulfide ore, reducing its coordination to gold, providing more vacant coordination sites for the cyanide ions. Oxidation also makes the sulfur component more water soluble, which can prevent it from blocking the carbon circuit.

Scale or mineral deposit formation can cause problems with mining process, including those described above. Scale or mineral deposits form when an ionic material in solution reaches its saturation point and begins to precipitate and adhere to a surface. Scale or mineral deposit formation may be worsened by the use of high pH solutions.

Scale or mineral deposits may form at any of numerous points in the process. For example, in the heap leaching process or vat leaching process, scale deposits may form at the sprinkler nozzle, or in other fluid handling equipment in contact with the leaching solution and/or pregnant solution. In the activated carbon recovery process, scale formation can block or occlude the carbon, decreasing the gold adsorption efficiency. In CIL and CIP processes, the various parts of the system involved in leaching and adsorption are subject to the formation of troublesome mineral deposits.

Scale or mineral deposits may also form downstream of these processes. For example, some mining processes include downstream treatment of tailings or waste streams. In some processes, the tailings or waste streams are transported through a pipe to a thickener or clarifier process, where the liquid and solid components are further separated, producing a liquid (overflow) stream and a solids stream. In some processes, flocculants may be added to the tailings or waste stream to enhance separation of the solid material. In some processes, lime may be added to the tailings or waste stream prior to feeding to the thickener to increase the pH, and/or precipitate the solids. In some processes, the resulting liquid (overflow) stream may be further treated with a filter, such as a leaf filter. Scale or mineral deposits may form in various portions of these processes, including the transport pipe, the thickener, the filter, and/or other related process components.

The scale or mineral deposits can build up over time and eventually lead to potentially expensive problems, such as: loss in heat transfer efficiency, flow restrictions and plugging, under-deposit corrosion, equipment damage and failure.

In exemplary embodiments, the methods described herein can be used to prevent scale formation in a mining process, including the mining processes described herein. In exemplary embodiments, the mining process is a process selected from the group consisting of: heap leaching, vat leaching, activated carbon recovery, carbon adsorption, carbon-in-pulp (CIP), and carbon-in-leach (CIL), or combinations or portions thereof.

In exemplary embodiments, the scale-inhibiting polymer may be added to the mining process fluid at any step or portion of the process, as necessary or desired. For example, the scale-inhibiting polymer may be added to one or more portions or steps of the process where the scale-inhibiting polymer is likely to reduce scale or mineral deposits in that portion or step of the process, or downstream therefrom. In some embodiments, the scale-inhibiting polymer may be added to a leach solution before it is combined with the ore. In some embodiments the scale-inhibiting polymer may be added to a leach solution, slurry, or heap during or after the leaching step. In some embodiments, the scale-inhibiting polymer may be added to a leached metal solution or slurry before, during or after the activated carbon recovery process. In processes in which the leaching and carbon recovery processes are combined, the scale-inhibiting polymer may be added to any portion or step of the process where necessary or desired. It will be understood that any one or a combination of any one of these application methods may be used in the embodiments. In one embodiment, the mining process comprises a leaching step and the scale-inhibiting polymer is added to the process before or during the leaching step. In one embodiment, the mining process comprises a carbon adsorption step and the scale-inhibiting polymer is added to the process before or during the carbon adsorption step.

The following examples are presented for illustrative purposes only, and are not intended to limit the scope of the invention.

**EXAMPLES**

Example 1. Synthesis of Exemplary Polymers

Three exemplary polymers were prepared according to the following procedures.

Exemplary Polymer 1. SAS/NaSS Copolymer

A reactor equipped with a thermocouple, a nitrogen inlet, two feeding tube inlets, a teflon stir shaft, and a heating mantle was charged with sodium allyl sulfonate (SAS), sodium styrene sulfonate (NaSS), EDTA and water. The reaction was carried out at 110°C with constant flow of nitrogen and high agitation (400 rpm). An Initiator mixture comprising water and ammonium persulfate was fed into the reactor over 3 hours. Once feeds were complete, the reaction mixture was held at 110°C for 2 hours. The reaction mixture was then cooled to room temperature and a solids measurement was taken.

Exemplary Polymer 2. SAS/NaSS/AMD Copolymer

A reactor equipped with a thermocouple, a nitrogen inlet, two feeding tube inlets, a teflon stir shaft, and a heating mantle was charged with sodium allyl sulfonate (SAS), sodium styrene sulfonate (NaSS), EDTA and water. The reaction was carried out at 110°C with constant flow of nitrogen and high agitation (400 rpm). An Initiator mixture comprising water and ammonium persulfate, and a Monomer feed comprising acrylamide, were both fed into the reactor over 3 hours. Once feeds were complete, the reaction mixture was held at 110°C for 2 hours. The reaction mixture was then cooled to room temperature and a solids measurement was taken.

Exemplary Polymer 3. SAS/NaSS/MAc Copolymer

A reactor equipped with a thermocouple, a nitrogen inlet, two feeding tube inlets, a teflon stir shaft, and a heating mantle was charged with sodium allyl sulfonate (SAS), sodium styrene sulfonate (NaSS), EDTA and water. The reaction was carried out at 110°C with constant flow of nitrogen and high agitation (400 rpm). A Monomer feed comprising maleic anhydride (MAc) was added once the reaction temperature reached 90°C through a funnel addition. An initiator mixture comprising water and ammonium persulfate was fed into the reactor over 3 hours. Once feed was complete, the reaction mixture was held at 110°C for 2 hours. The reaction mixture was then cooled to room temperature and a solids measurement was taken.

Example 2. Scale-inhibiting activity

The above three exemplary scale-inhibiting polymers, and one commercially available scale-inhibiting polymer (KemGuard® 269, commercially available from Kemira Chemicals, Inc., Atlanta, Georgia) as a comparative example, were evaluated to compare their ability to control or prevent scale or mineral deposition. Aqueous solutions that were supersaturated with calcium carbonate were used to simulate scaling conditions. A calcium carbonate scaling solution was prepared as described below.

Stock solutions of cation and anion brine solutions were prepared as follows:

Cation Solution: 19.4 g/l $CaCl_2 \cdot 2H_2O$. Solution contains 5300 ppm $Ca^{2+}$.

Anion Solution: 15.4 g/l $Na_2SO_4$; 0.69 g/l $NaHCO_3$; 22.4 g/L $MgSO_4 \cdot 2H_2O$; 21.4 g/L $MgCl_2 \cdot 2H_2O$; 80.0 g/L NaCl . Final pH adjusted to 7.5 with sodium hydroxide. Solution contains: 16000 ppm $SO_4^{2+}$, 250 ppm $HCO_3^{2-}$, 21500 ppm Na, 2400 ppm Mg, and 32600 ppm $Cl^-$

All treatment solutions were prepared in deionized water using laboratory chemical salts. Note that the final test solution is a mixture of the cation solution, the anion solution, and the polymer. Accordingly, the final concentration of the chemical constituents in the combined solutions is approximately one-half the value shown for the individual solutions.

Stock solutions of each of the exemplary scale-inhibiting polymers, and the comparative polymer, were prepared as a 100 mg/mL solution in distilled water based upon actives of each scale-inhibiting polymers used.

Saprolite clay was prepared for experiments by mixing the bulk clay with anionic brine, settling the mixture overnight, and then decanting the liquid from the clay slurry. The clay was filtered using an 850 $\mu$m mesh sieve and solids of the clay were determined using a CEM Labwave 9000 Microwave.

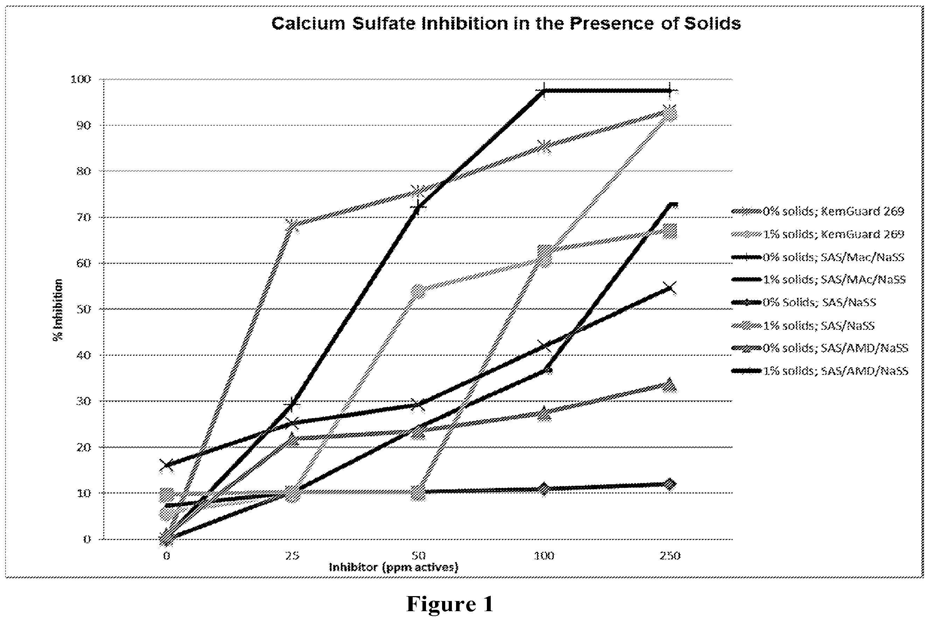

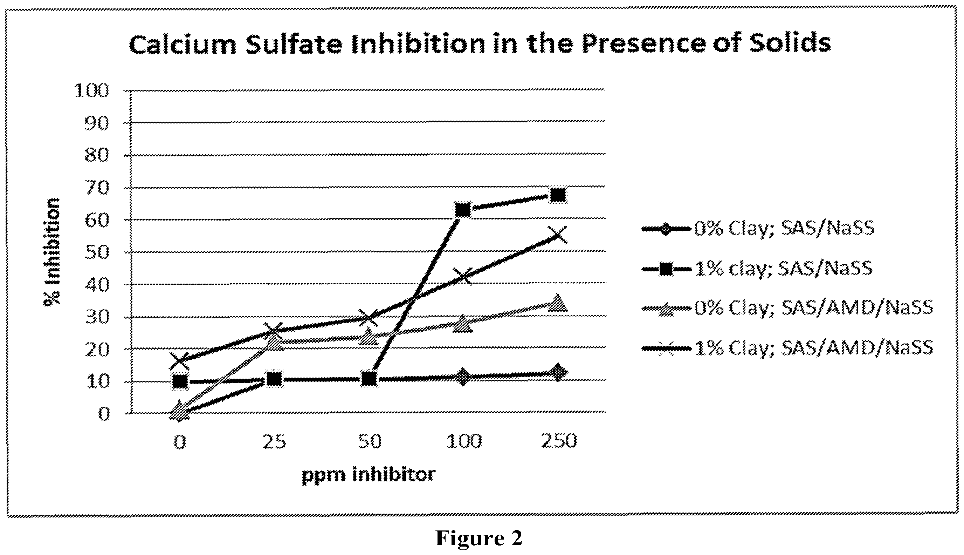

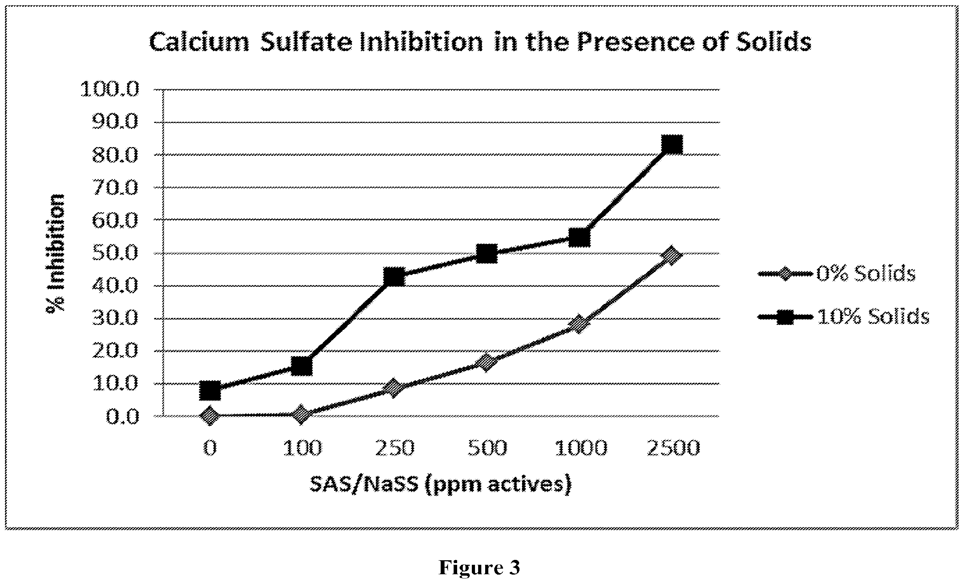

In a glass vial, the clay and additional anion brine solution were mixed to provide a 15 mL solution having the specified experiment solids concentration (See Figs. 1-4) and having the proper concentration of anions, for the final solution. Where 0% solids are indicated, no clay was added to the anion brine solution.

Using a digital pipette, a precise amount of scale-inhibiting polymers was added to the vial containing clay and anion brine solution, to provide the specified scale-inhibitor concentration for the final solution (See Figs. 1-4), followed by slight mixing.

Approximately 15 mL of cationic brine was added to the vials, which were then tightly capped and mixed slightly. The vials were shaken at 250 rpm for 20 hours at 70°C to allow for calcium sulfate scale to form.

Once shaken, the vials containing the clay slurry along with anion/cation brines dosed with scale-inhibiting polymers settled for 15 minutes. The samples were worked up for calcium titration using Hach Method 8204 (Hach, 2004). Following the Hach Method, exactly 3 mL of each sample was filtered using a 0.22$\mu$m syringe filter and diluted to 100 mL total with distilled water. Potassium Hydroxide (8N, 1mL) was added and mixed to the sample solution, followed by the addition of one CalVer 2 Calcium Indicator Powder Pillow. After proper mixing, the solution turned bright pink, and then titrated with 0.08M EDTA solution using a Hach Digital Titrator, Model 16900. The endpoint yields a color change from pink to blue, and titrator digits can be converted to calcium remaining in solution using the following calculation (where mg/L Ca is as $CaCO_3$ and T.D. is Titrator Digits):

$$mg/_L \ Ca = \frac{total \ volume \ (mL)}{sample \ volume \ (mL)} \times T.D.$$

Once the concentration of calcium remaining in solution was calculated, percent inhibition could be calculated based on the titration of baseline samples. Percent inhibition is calculated as follows:

$$Percent \ Inhibition = \left\{ \frac{\left( Ca_{filtrate} - Ca_{control} \right)}{\left( Ca_{initial} - Ca_{control} \right)} \right\} \times 100$$

Where:

Ca$_{filtrate}$ = Calcium in filtrate
Ca$_{control}$ = Calcium in untreated control
Ca$_{initial}$ = Calcium in initial supersaturated solution

The referenced "untreated control" or "baseline" samples contain only the clay solids, anionic and cationic brines with no scale-inhibiting polymers present. The more calcium retained in solution resulted in higher inhibition.

The results are shown in Figures 1-3.

Example 3. Scale-inhibiting activity of exemplary polymer/phosphonate blends

In this example, exemplary SAS/NaSS polymers were blended with phosphonates. The blends were evaluated to compare their ability to control or prevent scale or mineral deposition.

Sample blends were made by blending the respective phosphonate and scale-inhibiting polymer in a 1:1 ratio of actives. Phosphonates used in this example were bishexamethylenetriamine penta(methylene phosphonic acid) [BHTPMP] or Amino tris(methylene phosphonic acid) [ATMP]. Stock solutions of each of the exemplary scale-inhibiting polymer and phosphonate blend were prepared as a 100 mg/mL solution in distilled water based upon combined actives of each blend.

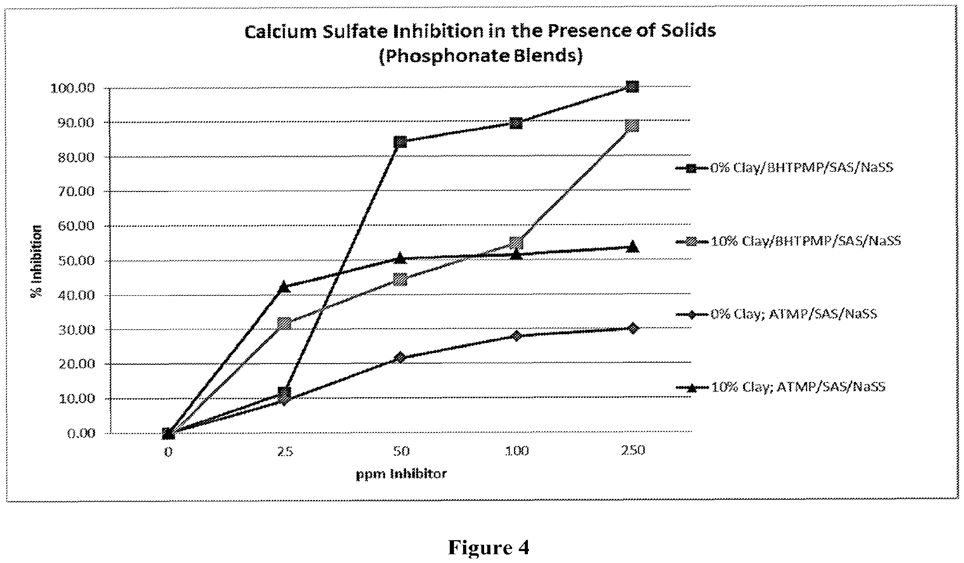

The blends were tested according to the same methods in Example 2. The results are shown in Figure 4.

## Claims

1. A method for preventing scale formation in circulating fluid, wherein the method comprises adding to the circulating fluid a scale-inhibiting polymer;
   wherein the scale-inhibiting polymer comprises two or more monomers wherein at least one recurring monomer is an allyl sulfonate-containing monomer and at least one recurring monomer is a styrene sulfonate-containing monomer,
   wherein the circulating fluid is utilized in, or is a component of, a mining process; or
   wherein the circulating fluid is in a system that is utilized in a mining process; or
   wherein the circulating fluid is, or has been at some point, in contact with mineral ore slurries.

2. The method of claim 1, wherein the circulating fluid is utilized in, or is a component of, a mining process.

3. The method of claim 2, wherein the mining process involves extracting metal from a raw mineral ore; optionally wherein the metal is selected from the group consisting of gold, silver, mercury, nickel, copper and mixtures thereof.

4. The method of claim 2, wherein the mining process is a process selected from the group consisting of: heap leaching, vat leaching, activated carbon recovery, carbon adsorption, carbon-in-pulp (CIP), carbon-in-leach (CIL), and combinations thereof.

5. The method of claim 4, wherein the mining process comprises a leaching step and wherein the scale-inhibiting polymer is added to the process before or during the leaching step; or
   wherein the mining process comprises a carbon adsorption step and wherein the scale-inhibiting polymer is added to the process before or during the carbon adsorption step.

6. The method of claim 2, wherein the circulating fluid comprises an aqueous alkali cyanide solution.

7. The method of claim 2, wherein the scale-inhibiting polymer is added to the circulating fluid as a composition comprising the scale-inhibiting polymer and water.

8. The method of claim 1, wherein the allyl sulfonate-containing monomer is sodium allyl sulfonate.

9. The method of any one of claims 1 or 8, wherein the styrene sulfonate-containing monomer is sodium styrene sulfonate.

10. The method of any one of claims 1, 8 or 9, wherein the scale-inhibiting polymer comprises three or more recurring monomers.

11. The method of claim 10, wherein at least one recurring monomer is selected from the group consisting of maleic acid, itaconic acid, acrylamide, acrylic acid, methacrylic acid, polyethylene glycol monomethacrylate, maleic anhydride, t-butyl acrylamide, hydroxy propyl acrylate, hydroxy ethyl methacrylate, hydroxy propyl methacrylate, and vinyl phosphonic acid.

12. The method of claim 10, wherein at least one recurring monomer is acrylamide, or wherein at least one recurring monomer is maleic acid.

13. The method of any one of claims 1 or 8 to 12, wherein the scale-inhibiting polymer has a molecular weight of 1,000 to 12,000 Daltons.

14. The method of any one of claims 1 to 6 or 8 to 13, wherein the scale-inhibiting polymer is added in the form of a composition comprising the scale-inhibiting polymer and a solvent, optionally wherein the solvent is water.

15. The method of any one of claims 1 to 14 wherein the circulating fluid is, or has been at some point, in contact with mineral ore slurries comprising limonite, hematite, nickel or copper.

16. The method of any one of claims 1 to 15 wherein the scale-inhibiting polymer comprises less than 30% of a third monomer and from about 30% to about 60% of each of the sulfonate-containing monomers.

**Patentansprüche**

1. Verfahren zum Verhindern von Kesselsteinbildung in zirkulierendem Fluid, wobei das Verfahren ein Zugeben eines kesselsteinhemmenden Polymers zu dem zirkulierenden Fluid umfasst;
   wobei das kesselsteinhemmende Polymer zwei oder mehr Monomere umfasst, wobei es sich bei mindestens einem wiederkehrenden Monomer um ein allylsulfonathaltiges Monomer handelt und es sich bei mindestens einem wiederkehrenden Monomer um ein styrolsulfonathaltiges Monomer handelt,
   wobei das zirkulierende Fluid in einem Bergbauprozess eingesetzt wird oder ein Bestandteil davon ist; oder wobei sich das zirkulierende Fluid in einem System befindet, das in einem Bergbauprozess eingesetzt wird; oder
   wobei sich das zirkulierende Fluid an irgendeiner Stelle in Kontakt mit Mineralerzaufschlämmungen befindet oder befand.

2. Verfahren nach Anspruch 1, wobei das zirkulierende Fluid in einem Bergbauprozess eingesetzt wird oder ein Bestandteil davon ist.

3. Verfahren nach Anspruch 2, wobei der Bergbauprozess das Gewinnen von Metall aus einem Rohmineralerz beinhaltet;
   wobei das Metall gegebenenfalls aus der Gruppe bestehend aus Gold, Silber, Quecksilber, Nickel, Kupfer und Gemischen davon ausgewählt ist.

4. Verfahren nach Anspruch 2, wobei es sich bei dem Bergbauprozess um einen Prozess handelt, der ausgewählt aus der Gruppe bestehend aus: Haufenlaugung, Rührlaugung, Aktivkohlerückgewinnung, Kohlenstoffadsorption, Carbon-in-Pulp (CIP), Carbon-in-Leach (CIL) und Kombinationen davon.

5. Verfahren nach Anspruch 4, wobei der Bergbauprozess einen Laugungsschritt umfasst und wobei das kesselsteinhemmende Polymer vor dem oder während des Laugungsschritts zu dem Prozess gegeben wird; oder wobei der Bergbauprozess einen Kohlenstoffadsorptionsschritt umfasst und wobei das kesselsteinhemmende Polymer vor dem oder während des Kohlenstoffadsorptionsschritts zu dem Prozess gegeben wird.

6. Verfahren nach Anspruch 2, wobei das zirkulierende Fluid eine wässrige Alkalicyanidlösung umfasst.

7. Verfahren nach Anspruch 2, wobei das kesselsteinhemmende Polymer als Zusammensetzung, die das kesselsteinhemmende Polymer und Wasser umfasst, zu dem zirkulierenden Fluid gegeben wird.

8. Verfahren nach Anspruch 1, wobei es sich bei dem allylsulfonathaltigen Monomer um Natriumallylsulfonat handelt.

9. Verfahren nach einem der Ansprüche 1 oder 8, wobei es sich bei dem styrolsulfonathaltigen Monomer um Natriumstyrolsulfonat handelt.

10. Verfahren nach einem der Ansprüche 1, 8 oder 9, wobei das kesselsteinhemmende Polymer drei oder mehr wiederkehrende Monomere umfasst.

11. Verfahren nach Anspruch 10, wobei mindestens ein wiederkehrendes Monomer aus der Gruppe bestehend aus Maleinsäure, Itaconsäure, Acrylamid, Acrylsäure, Methacrylsäure, Polyethylenglycolmonomethacrylat, Maleinsäureanhydrid, t-Butylacrylamid, Hydroxypropylacrylat, Hydroxyethylmethacrylat, Hydroxypropylmethacrylat und Vinylphosphonsäure ausgewählt ist.

12. Verfahren nach Anspruch 10, wobei es sich bei mindestens einem wiederkehrenden Monomer um Acrylamid handelt oder wobei es sich bei mindestens einem wiederkehrenden Monomer um Maleinsäure handelt.

13. Verfahren nach einem der Ansprüche 1 oder 8 bis 12, wobei das kesselsteinhemmende Polymer ein Molekulargewicht von 1.000 bis 12.000 Dalton aufweist.

**14.** Verfahren nach einem der Ansprüche 1 bis 6 oder 8 bis 13, wobei das kesselsteinhemmende Polymer in Form einer Zusammensetzung zugegeben wird, die das kesselsteinhemmende Polymer und ein Lösungsmittel umfasst, wobei es sich bei dem Lösungsmittel gegebenenfalls um Wasser handelt.

**15.** Verfahren nach einem der Ansprüche 1 bis 14, wobei sich das zirkulierende Fluid an irgendeiner Stelle in Kontakt mit Mineralerzaufschlämmungen, die Limonit, Hämatit, Nickel oder Kupfer umfassen, befindet oder befand.

**16.** Verfahren nach einem der Ansprüche 1 bis 15, wobei das kesselsteinhemmende Polymer zu weniger als 30 % ein drittes Monomer und zu etwa 30 % bis etwa 60 % jedes der sulfonathaltigen Monomere umfasst.

**Revendications**

**1.** Procédé pour la prévention de la formation de tartre dans du fluide en circulation, le procédé comprenant l'ajout d'un polymère inhibiteur de tartre au fluide en circulation ;
dans lequel le polymère inhibiteur de tartre comprend deux ou plus de deux monomères, au moins un monomère récurrent étant un monomère contenant un groupe allylsulfonate et au moins un monomère récurrent étant un monomère contenant un groupe styrènesulfonate,
dans lequel le fluide en circulation est utilisé dans un processus minier, ou est un composant de celui-ci ; ou
dans lequel le fluide en circulation se trouve dans un système qui est utilisé dans un processus minier ; ou
dans lequel le fluide en circulation est, ou a été à un certain moment, en contact avec des pulpes de minerai.

**2.** Procédé selon la revendication 1, dans lequel le fluide en circulation est utilisé dans un processus minier ou est un composant de celui-ci.

**3.** Procédé selon la revendication 2, dans lequel le processus minier comporte l'extraction de métal à partir d'un minerai brut ; éventuellement
le métal étant choisi dans le groupe constitué par l'or, l'argent, le mercure, le nickel, le cuivre et les mélanges de ceux-ci.

**4.** Procédé selon la revendication 2, dans lequel le processus minier est un processus choisi dans le groupe constitué par : la lixiviation en tas, la lixiviation par percolation, la récupération avec du charbon actif, l'adsorption sur charbon, le charbon en pulpe (CIP), le charbon en lixiviat (CIL) et les combinaisons de ceux-ci.

**5.** Procédé selon la revendication 4, dans lequel le processus minier comprend une étape de lixiviation et dans lequel le polymère inhibiteur de tartre est ajouté au processus avant ou pendant l'étape de lixiviation ; ou
dans lequel le processus minier comprend une étape d'adsorption sur charbon et dans lequel le polymère inhibiteur de tartre est ajouté au processus avant ou pendant l'étape d'adsorption sur charbon.

**6.** Procédé selon la revendication 2, dans lequel le fluide en circulation comprend une solution aqueuse de cyanure de métal alcalin.

**7.** Procédé selon la revendication 2, dans lequel le polymère inhibiteur de tartre est ajouté au fluide en circulation sous forme d'une composition comprenant le polymère inhibiteur de tartre et de l'eau.

**8.** Procédé selon la revendication 1, dans lequel le monomère contenant un groupe allylsulfonate est l'allylsulfonate de sodium.

**9.** Procédé selon l'une quelconque des revendications 1 ou 8, dans lequel le monomère contenant un groupe styrènesulfonate est le styrènesulfonate de sodium.

**10.** Procédé selon l'une quelconque des revendications 1, 8 ou 9, dans lequel le polymère inhibiteur de tartre comprend trois ou plus de trois monomères récurrents.

**11.** Procédé selon la revendication 10, dans lequel au moins un monomère récurrent est choisi dans le groupe constitué par l'acide maléique, l'acide itaconique, l'acrylamide, l'acide acrylique, l'acide méthacrylique, le monométhacrylate de polyéthylèneglycol, l'anhydride maléique, le t-butylacrylamide, l'acrylate d'hydroxypropyle, le méthacrylate d'hydroxyéthyle, le méthacrylate d'hydroxypropyle et l'acide vinylphosphonique.

**12.** Procédé selon la revendication 10, dans lequel au moins un monomère récurrent est l'acrylamide ou dans lequel au moins un monomère récurrent est l'acide maléique.

**13.** Procédé selon l'une quelconque des revendications 1 ou 8 à 12, dans lequel le polymère inhibiteur de tartre a une masse moléculaire de 1 000 à 12 000 daltons.

**14.** Procédé selon l'une quelconque des revendications 1 à 6 ou 8 à 13, dans lequel le polymère inhibiteur de tartre est ajouté sous la forme d'une composition comprenant le polymère inhibiteur de tartre et un solvant, éventuellement le solvant étant l'eau.

**15.** Procédé selon l'une quelconque des revendications 1 à 14 dans lequel le fluide en circulation est, ou a été à un certain moment, en contact avec des pulpes de minerai comprenant de la limonite, de l'hématite, du nickel ou du cuivre.

**16.** Procédé selon l'une quelconque des revendications 1 à 15 dans lequel le polymère inhibiteur de tartre comprend moins de 30 % d'un troisième monomère et d'environ 30 % à environ 60 % de chacun des monomères contenant un groupe sulfonate.

Figure 1

EP 2 989 176 B1

**Figure 2**

EP 2 989 176 B1

**Figure 3**

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4566973 A
- EP 0538026 A1
- US 4454046 A
- US 5112496 A
- WO 2013019627 A

**Non-patent literature cited in the description**

- **FRAYNE, C.** Cooling Water Treatment Principles and Practices: Charts and Notes for Field Use. Chemical Publishing Company, 2010
- **ANTONY et al.** Scale formation and control in high pressure membrane water treatment systems: A Review. *Journal of Membrane Science,* 2011, vol. 383, 1-16
- **CAUDLE, K.** Test methodology to ensure adequacy of barium sulfate scale treatment. *World Oil Online,* 2010, vol. 123 (11
- **STEPHENSON, D.J.** Water and Wastewater Systems Analysis. Elsevier Science Publishing Company, Inc, 1988
- General Electric (GE) Power & Water. Handbook of Industrial Water Treatment. 2011
- Produced Water Chemical Treatment. Hayword G., Ltd, 2013, vol. 101
- **SONGQING, G. ; ZHONGLIN, Y.** Preheaters and Digesters in the Bayer Digestion Process, Light Metals. The Minerals, Metals & Materials Society, 2004